# EUROPEAN PATENT APPLICATION

(11) **EP 1 967 805 A1**
(43) Date of publication of application: **10.09.2008**
(21) Application number: 07381022.8
(22) Date of filing: 09.03.2007
(51) Int. Cl.: F26B 21/02, B32B 17/10, C03C 27/12, C03B 29/02

(54) **Vertical glass rolling furnace without vacuum bag**

(71) Applicant: Hornos Industriales Pujol S.A., 08980 Sant Feliu de Llobregat (Barcelona) (ES)
(72) Inventor: Pujol Mari, Jorge, 08980 Sant Feliu de Llobregat (ES)
(74) Representative: Esteban Perez-Serrano, Maria Isabel

(57) **Abstract**

The object of the present invention is a vertical glass rolling furnace without vacuum bag with an accelerated convection heat transmission system which enables hot air to circulate uniformly round each of the glass parts directly on their surface without the aforementioned vacuum bag or any pressure, and where, due to the perimeter coating of the glass parts which may be of rubber, fabric, or a similar material, the whole perimeter of the glass is sealed and is reinforced by means of tape, a vacuum can be created directly on the part by introducing a valve through an aperture in the rubber , fabric or similar.

## Description

### OBJECT OF THE INVENTION

The object of the present invention is a vertical glass rolling furnace without vacuum bag with an accelerated convection heat transmission system which permits recirculation of the hot air in a uniform manner round each of the glass parts directly onto their surface without the need for the aforementioned vacuum bag and without pressure.

Due to the perimeter coating of the glass parts which may be rubber, fabric, or a similar material which seals the whole perimeter of the glass and which is reinforced by means of tape, a vacuum can be created directly on the part by introducing a valve through an aperture in the rubber, fabric or similar material.

The invention is characterised in that due to the fact that the vacuum is created directly on the part, it enables the furnace to operate vertically, thus reducing the useful space needed for the furnace and the convection heat transmission coefficient is increased which as a result increases production.

### BACKGROUND TO THE INVENTION

Traditional systems of glass rolling with one or more films of PVB Butyric Polyvinyl) EVA (ethylene vinyl acetate) or similar material in vacuum bag are well known in the state of the art. The previous systems have two basic disadvantages, one associated with the heat transmission system and the other with vacuum bags.

Radiant resistant furnaces up to the loading stage are highly uniform resolving the problem of salvaging the heat and also vacuum bags with zero porosity. However, they have the disadvantage of low productivity, as all their advantages are cancelled out when the number of floors per furnace rises and the heat does not reach the centre of the furnace salvaging the shade of each of the floors.

The only possible solution to the problem of productivity to date had been to intercalate resistances tier by tier and this raises machinery costs considerably and dimensionally limits the possibility of large scale production due to the technical limitations of creating a machine of this height which is consistently and industrially marketable.

Low temperature accelerated convection furnaces have a heat transmission to the load coefficient which is three times greater than the coefficient of heat transmission by radiation.

This occurs when the heat transmission is direct onto the part and not through a zero porosity vacuum bag which hinders the main function of the furnace, which is heat transmission through convection.

In this case the main problem was the heat transmission and not productivity or the cost of machinery.

With regard to the second disadvantage, the system of bags, sacks, plastics etc. leads to a high percentage of defects when making a large number of large size parts due to the difficulty of creating a vacuum in the whole area of the bag.

Due to this difficulty, breakages occur as a result of pressure on the edges of the glass, air pockets form in the vacuum surface or dirt is present in the bag due to suppuration of PVB EVA or similar material during the process.

Possible solutions include taping the whole part which increases preparation time and therefore the manufacturing costs, or cleaning the bag which risks breaking the bag which is extremely costly.

By means of the vertical glass rolling furnace without vacuum bag described in the present invention all the previous disadvantages are resolved by a system which substitutes the vacuum bag and increases production through a convection heat transmission system.

### DESCRIPTION OF THE INVENTION

The present invention refers to a vertical glass rolling furnace which forms part of a sandwich type piece with one or more films of PVB, EVA or similar materials in addition to which it may be provided with one or various layers of wood, all of which is in a vacuum atmosphere.

The sandwich-type parts are sealed along their perimeter and reinforced with tape, so that the vacuum can be created directly on the part when a valve is introduced through an aperture in the seal.

In this way the sandwich-type parts are placed vertically in a cart which is introduced into the furnace so that the space between each part is sufficient only to enable hot air to circulate round them.

When the door of the furnace is opened the load is totally accessible, and therefore it is possible to load and unload the loading carts with the plates of glass.

The vertical furnace permits the same number of sandwich-type pieces with smaller dimensions as there is no need for a tower of floors to introduce the parts horizontally.

Thus the sandwich-type parts remain free of obstacles so that an accelerated convection high productivity system may be used with greater uniformity on each of the pieces and without the need for pressure.

The recirculation of hot air within the furnace is of the laminar type and is carried out transversally through the blades of one or various centrifugal fans which optimise and spread the interior flow and reduce the interior thermal gradients of the furnace.

The interior walls of the treatment chamber as well as the roof are coated with various layers of insulating ceramic fibre of different density for the purpose of keeping heat loss from the furnace to a very minimum.

The interior structure of the furnace comprises two bodies, one which forms the treatment area where the carts with the' glass are located and the other known as the collector which is the location of the heat generator, the convector element and the dampers.

The regulation and control of the treatment cycles shall be made through an independent programmer via PLC, or "programmable logic controller" which regulates the temperature, recirculation in the furnace and vacuum control in each of the parts. To summarise, the invention refers to a vertical glass rolling furnace without vacuum bag characterised in that sandwich-type structured parts are introduced into the furnace with at least two sheets of glass which are encompassed by one or more films of PVB, EVA or similar materials, and in which the perimeter of the parts with the sandwich-type structure is provided with a seal together with a valve for creating the vacuum directly on the parts once they have been introduced into the furnace which uses a convection heat transmission system.

### DESCRIPTION OF THE DRAWINGS

The present descriptive report is supplemented by a series of drawings illustrative of a preferred embodiment but not however restricting the invention in any way.

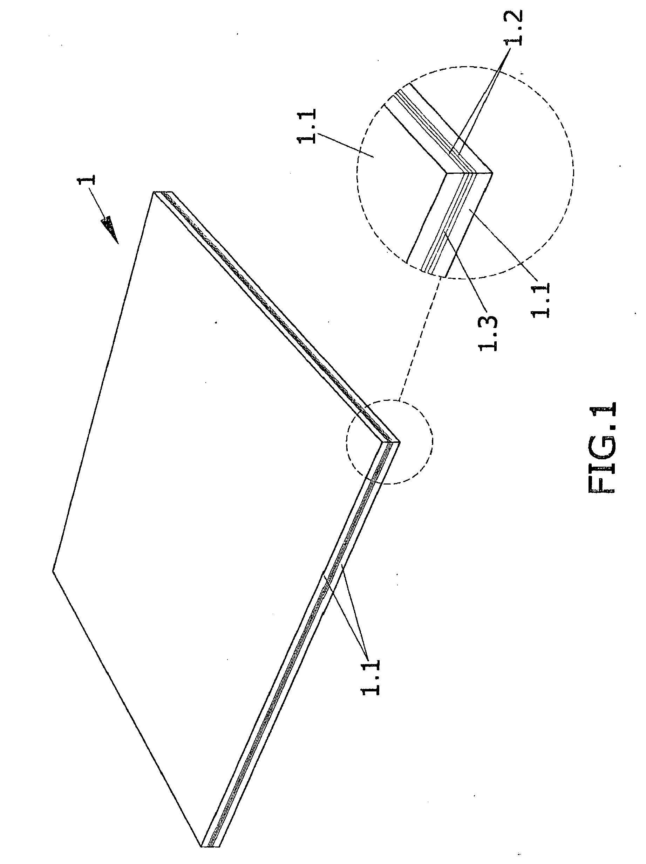

Figure 1 shows a perspective view of the sandwich-type part.

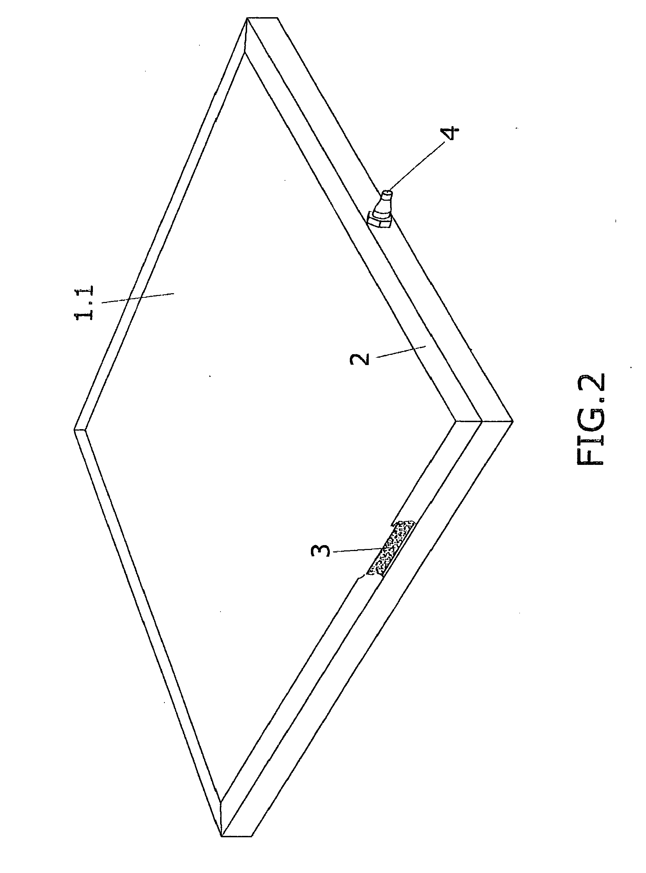

Figure 2 shows a perspective view of the sandwich type part in Figure 1 sealed along its perimeter and with the vacuum valve.

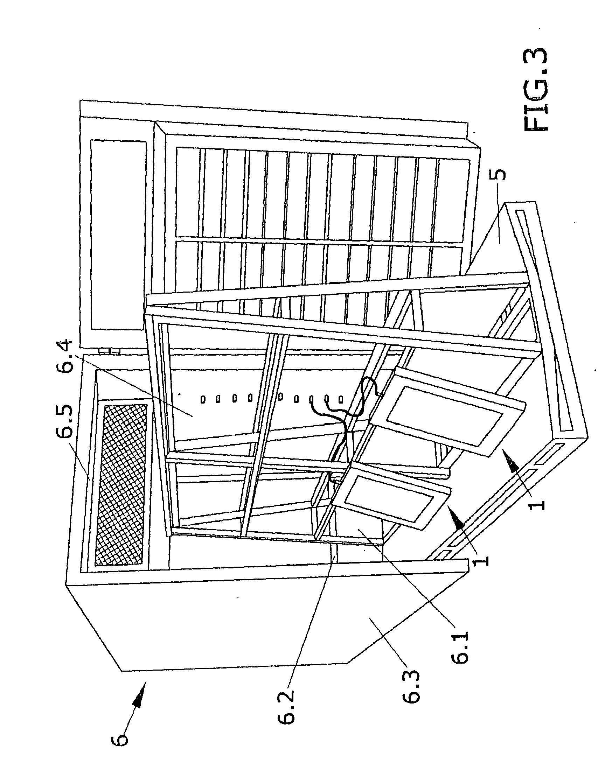

Figure 3 shows a perspective view of the sandwich type part in Figure 2 reinforced by means of tape and connected to a hosepipe in order to create the vacuum once it is introduced into the furnace.

### PREFERRED EMBODIMENT OF THE INVENTION

In the light of the foregoing description, the present invention refers to a vertical glass rolling furnace (1.1) which forms part of a sandwich-type piece (1) with one or more films (1.2) of PVB, EVA or similar materials in addition to the fact that it may be provided with one or various layers (1.3) of wood, all of which is a vacuum atmosphere.

The perimeter of the sandwich type parts (1) is provided with a seal (2) previously reinforced with tape (3) as well as a valve (4) situated on an aperture in the seal (2) in order to create the vacuum directly on the part (1).

In this way the sandwich type parts (1) are placed in vertical position in a cart (5) which is placed in the furnace (6) with a space between each part so that the hot air circulates.

Thus the sandwich-type parts (1) remain free of obstacles so that an accelerated convection high productivity system may be used with greater uniformity on each of the parts (1).

Heat is produced in a heat generator and the hot air inside the furnace (6) re-circulates transversally through the blades of one or various centrifugal fans (neither element is shown in the Drawings).

The furnace hearth (6.1) comprises a metal platform braced to support its weight.

The structure (6.2) of the furnace (6) is formed by a braced metal frame with profiles which are plated externally with steel plate to support the attachment elements of insulating refractory panes as well as the heating equipment (neither element is shown in the Drawings).

The insulating panels in question are characterised by an exceptional mechanical resistance with a minimum weight, as the sandwich type panels are manufactured from galvanised steel in the interior and lacquered steel externally with a nucleus of high density rock wool.

The external part (6.3) of the furnace (6) is lacquered steel with a layer of paint. The interior walls (6.4) of the furnace as well as the roof are coated with various layers of insulating ceramic fibre of different density for the purpose of reducing heat loss from the furnace (6) to a minimum.

Thus the interior structure comprises two bodies one which comprises the treatment area and where the, carts (5) are located with the sandwich-type parts (1) and another known as collector for placing the heat generator, the convector element and the dampers.

The regulation and control of the treatment cycles shall be carried out by means of an independent PLC programmer which regulates the temperature, recirculation in the furnace and vacuum control in each of the parts.

The vertical glass rolling furnace may also be used to carry out a heat soak test or HST which is a complementary heat treatment which ensures the mechanical performance of the heat tempered glass or as a paint dryer.

The essential nature of this invention is not altered in any way by variations in materials, form, shape and arrangement of the component elements which are described in a manner which is in no way restrictive but which is sufficient for an expert to proceed to its reproduction.

## Claims

1. Vertical glass rolling furnace without vacuum bag **characterised in that** parts with a sandwich-type structure (1) are introduced into the furnace (6) with at least two sheets of glass (1.1) which are encompassed by one or more films (1.2) of PVB, EVA or similar materials, where the perimeter of the parts (1) with the sandwich-type structure has a seal (2) together with a valve (4) for creating the vacuum directly on the parts (1) once they have been introduced into the furnace (6) which uses a convection heat transmission system.

2. Vertical glass rolling furnace without vacuum bag according to claim 1 **characterised in that** the parts (1) with sandwich type structure are provided with one or various layers (1.3) of wood.

3. Vertical glass rolling furnace without vacuum bag according to claim 1 **characterised in that** the perimeter of the parts (1) with sandwich type structure are reinforced using (3) prior to placing the seal (2).

4. Vertical glass rolling furnace without vacuum bag according to claim 1 **characterised in that** the sandwich-type parts (1) are placed in a vertical position in a cart (5) which is introduced into the furnace (6) with a space between each part so that the hot air circulates.

5. Vertical glass rolling furnace without vacuum bag described **characterised in that** the heat is produced in a heat generator and the hot air inside the furnace (6) is re-circulated transversally through the blades of one or various centrifugal fans.

6. Vertical glass rolling furnace without vacuum bag according to claim 1 **characterised in that** the hearth (6.1) of the furnace (6) consists of a metal braced platform.

7. Vertical glass rolling furnace without vacuum bag according to claim 1 **characterised in that** the structure (6.2) of the furnace (6) consists of a metal braced frame with profiles comprising steel plate on the outside and which supports the attachment elements for insulating refractory panels as well as the heating equipment.

8. Vertical glass rolling furnace without vacuum bag according to claim 1 **characterised in that** the external part (6.3) of the furnace (6) is lacquered steel with a layer of paint.

9. Vertical glass rolling furnace without vacuum bag according to claim 1 **characterised in that** the internal walls (6.4)and the roof (6.5) are coated with several layers of insulating ceramic fibre of varying density.

10. Vertical glass rolling furnace without vacuum bag according to claim 1 **characterised in that** the internal structure of the furnace (6) consists of two bodies one which comprises the treatment area of the sandwich-type parts (1) and the other known as collector for placing the heat generator, the convector element and the dampers.

11. Vertical glass rolling furnace without vacuum bag according to claim 1 **characterised in that** an independent PLC programmer regulates the temperature, recirculation in the furnace (6) and vacuum control in each of the sandwich type parts (1).

12. Vertical glass rolling furnace without vacuum bag according to claim 1 **characterised in that** the furnace (6) is used to carry out a heat soak test or as a paint dryer.
